# EUROPÄISCHE PATENTANMELDUNG

(11) **EP 0 816 590 A2**
(43) Veröffentlichungstag der Anmeldung: **07.01.1998**
(21) Anmeldenummer: 97110445.0
(22) Anmeldetag: 26.06.1997
(51) Int. Cl.: E04F 13/08

(54) **Befestigungselement mit Träger, zum Befestigen von Verkleidungsplatten an diesem Träger**

(30) Priorität: 28.06.1996 DE 29611333 U
(71) Anmelder: Wisan Technik AG, CH-6300 Zug (CH)
(72) Erfinder: Wickart, Jürgen, 6300 Zug (CH)
(74) Vertreter: Blum, Rudolf Emil Ernst

(57) **Zusammenfassung**

Damit jede Verkleidungsplatte (4, 20) nicht mehr mittels Schrauben an einem Träger (1, 2) angeschraubt werden muss, werden aus Blech bestehende, verformbare Befestigungselemente (21) verwendet, die verschiedene abbiegbare Laschen (8-13) aufweisen. Manche (8-11) der Laschen dienen zum Befestigen der Befestigungselemente (21) am Träger (1,2), andere Laschen (12, 13) dienen zum Umfassen und damit Halten der Verkleidungsplatten (4, 20) am Träger. Mit einem einzigen Befestigungselement (21) können z.B. zwei benachbarte Verkleidungsplatten (4) erfasst werden. Das Befestigungselement (21) weist sägezahnförmige Spitzen (23) auf, die, wenn sie aus der Ebene des Bleches z.B. rechtwinklig herausgebogen werden, formschlüssig in eine benachbarte Verkleidungsplatte (4, 20) eingreifen. Hierdurch können mit ein und demselben Befestigungselement (21) auch rechtwinklig zueinander liegende Verkleidungsplatten (4, 20) getragen werden.

## Beschreibung

Die Erfindung betrifft ein Befestigungselement mit Träger, zur Halterung von Verkleidungsplatten an diesem Träger, wobei das Befestigungselement aus einem Metallstreifen besteht, der in seiner Ausgangsstellung eben ist und mehrere Laschen aufweist, die aus der Ebene des Metallstreifens abbiegbar sind, wobei eine erste Gruppe von Laschen zumindest teilweise dazu bestimmt ist, Teile des Trägers klammerartig zu umfassen zum Befestigen des Befestigungselementes am Träger; und eine zweite Gruppe von Laschen dazu bestimmt ist, zumindest eine Verkleidungsplatte so zu umfassen, dass sie zwischen einem Teil des Trägers und der Lasche der zweiten Gruppe liegt, zum Befestigen der Verkleidungsplatte am Träger und am Befestigungselement.

Aus dem DE-GM 89 02 318 ist ein Sanitärelement (Träger, Gestell, Rahmen) bekannt, das sowohl am Boden als auch mit seiner Rückseite an einer Wand abgestützt wird und sowohl vertikale als auch horizontale Holme umfasst. An einem solchen Sanitärelement werden Verkleidungsplatten befestigt, auf die dann ein Verputz aufgebracht wird oder Fliessen (Kacheln) darauf verlegt werden. Bisher wurden die Verkleidungsplatten mittels Schrauben an den vertikalen und horizontalen Holmen des Gestells angeschraubt. Dies erfordert viel Arbeit, viel Schrauben und ist somit teuer.

Um das zu vermeiden, wurde bereits ein Befestigungselement mit Träger eingangs genannter Art geschaffen, bei dem das Befestigungselement nicht mehr als Schraube (selbstschneidende Schraube) vorliegt, wodurch der vorerwähnte Nachteil vermieden werden kann (siehe hierzu die CH-Patentanmeldung Nr. 1776/94-2).

Gemäss dieser Patentanmeldung werden also nunmehr plastisch verformbare Metallstreifen verwendet, die einerseits am Träger festgeklemmt werden, und andererseits die Verkleidungsplatten hintergreifen. Eine derartige Halterung der Verkleidungsplatten am Träger geht schnell und erfolgt ohne Spezialwerkzeug und ohne Schrauben; es ist also auch keine Bohrmaschine notwendig. Mittels diesem Befestigungselement lassen sich jedoch nur in einer Ebene liegende Verkleidungsplatten befestigen.

Hier will die Erfindung Abhilfe schaffen. Die Erfindung, wie sie in den Ansprüchen gekennzeichnet ist, löst die Aufgabe, ein Befestigungselement einschliesslich einem Träger, zum Befestigen von Verkleidungsplatten an diesem Träger zu schaffen, bei welchem aus der zweiten Gruppe von Laschen entgegengesetzten Ende des Befestigungselementes sägezahnförmige, ausbiegbare Spitzen vorhanden sind, die Krallen bilden, die dazu bestimmt sind, formschlüssig in eine jeweils benachbarte Verkleidungsplatte einzugreifen.

Die durch die Erfindung erreichten Vorteile sind im wesentlichen darin zu sehen, dass sein Verwendungsbereich erweitert ist, so dass mit ein und demselben Befestigungselement auch rechtwinklig zueinander liegende Verkleidungsplatten befestigt werden können.

In der Zeichnung ist ein Ausführungsbeispiel des Erfindungsgegenstandes dargestellt. Es zeigen:
Fig. 1 ein einzelnes Befestigungselement in Draufsicht,
Fig. 2 ein Befestigungselement mit Träger und zwei davon getragenen Verkleidungsplatten, in schaubildlicher Darstellung,
Fig. 3 eine weitere Verwendung des Befestigungselementes zum Halten einer horizontalen Verkleidungsplatte an einem Träger, und
Fig. 4 auf der linken Seite eine Seitenansicht auf die Darstellung nach Fig. 3, und auf der rechten Seite eine Seitenansicht auf die Darstellung nach Fig. 2.

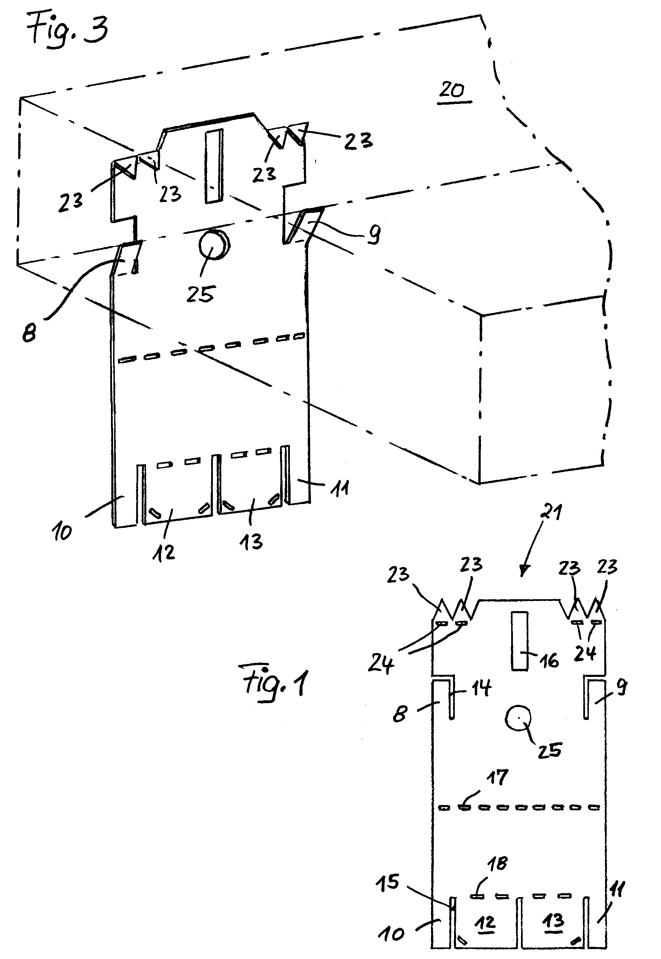

In den Figuren 1 bis 4 sind die Bauteile, die mit denen in der CH-Patentanmeldung Nr. 1776/94-2 übereinstimmen, mit gleichen Bezugszahlen versehen.

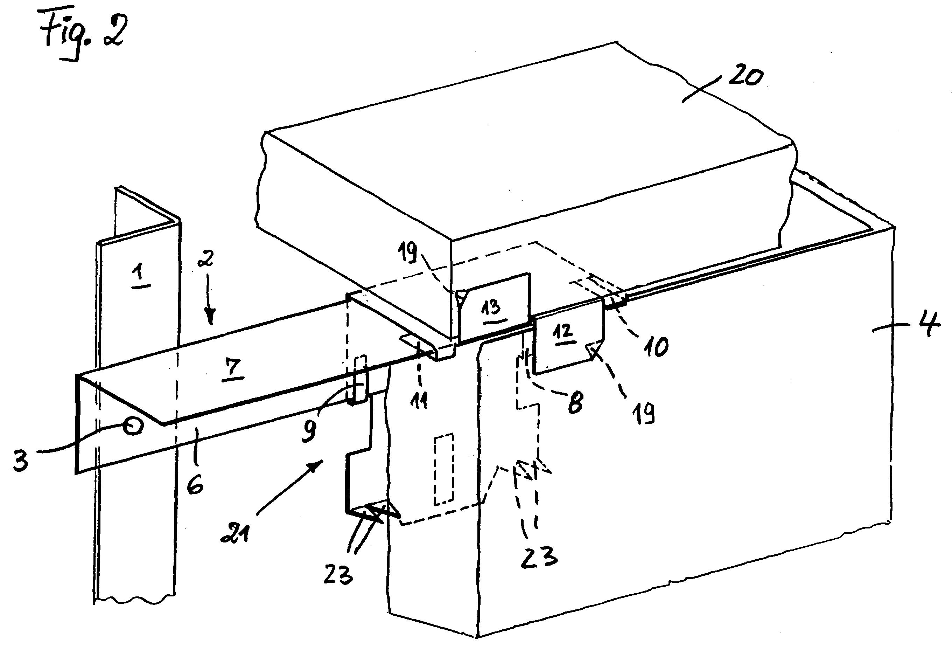

Vom erwähnten Träger ist in Fig. 2 ein vertikaler Holm 1 und ein horizontaler Holm 2 dargestellt, die mittels einer Schraube 3 miteinander verbunden sind. Fig. 2 zeigt eine vertikale Verkleidungsplatte 4 und eine horizontale Verkleidungsplatte 20, die mittels Befestigungselementen am Träger befestigt sind, wobei nur ein Befestigungselement 21 sichtbar ist. Dieses Befestigungselement 21 ist in Fig. 1 in seiner Ausgangsstellung gezeigt und befindet sich in den Fig. 2, 3 und 4 in zwei verschiedenen Funktionsstellungen. Der Träger kann z.B. ein aus Holmen mit verschiedenen Profilen zusammengesetztes Gestell sein. In Fig. 2 hat sowohl der vertikale Holm 1 als auch der horizontale Holm 2 ein L-Profil. Der horizontale Holm 2 hat die beiden Schenkel 6 und 7.

Das in Fig. 1 gezeigte Befestigungselement 21 besteht aus einem Metallstreifen, der in seiner in Fig. 1 gezeigten Ausgangsstellung eben ist und mehrere Laschen 8 bis 13 aufweist. Diese Laschen werden durch Ausschnitte 14 und 15 gebildet. Der Metallstreifen 21 hat eine längliche Form und ist mit zumindest einem Langloch 16 versehen, dass sich in Längsrichtung des Metallstreifens erstreckt. Der Metallstreifen hat noch Perforationen 17 und 18, die Biegelinien kennzeichnen.

Die Laschen 8, 9, 10 und 11 bilden eine erste Gruppe, und die Laschen 12 und 13 bilden eine zweite Gruppe. Die erste Gruppe an Laschen dient dazu, um bei der Verwendung des Befestigungselementes 21 nach Fig. 2 und rechte Seite von Fig. 4 das Befestigungselement 21 (Metallstreifen) am Holm 2 zu befestigen, und die Laschen 12 und 13 der zweiten Gruppe dienen dazu, um die Platte 4 am Holm 2 zu befestigen. Hierzu müssen die Laschen 8 bis 13 aus der Ebene des in Fig. 1 gezeigten Metallstreifens abgebogen werden, und der Metallstreifen nach Fig. 1 wird um die Biegelinie 17 rechtwinklig abgebogen. In Fig. 4 ist auf der rechten Seite der Holm 2 weggelassen worden; man sieht nur das Befestigungselement 21 und die beiden Verkleidungsplatten 4 und 20.

Das in Fig. 1 gezeigte Befestigungselement 21 hat die vier Laschen 8, 9, 10 und 11 der ersten Gruppe und die zwei Laschen 12 und 13 der zweiten Gruppe. Die Lasche 13 ist für die in Fig. 2 gezeigte horizontale Platte 10 bestimmt, und die Lasche 12 ist für die vertikale Platte 4 bestimmt. Aus Fig. 2 ist ersichtlich, dass die Laschen 8 bis 11 dazu bestimmt sind, die beiden Schenkel 6 und 7 des Holmes 2 klammerartig zu umfassen zum Befestigen des Befestigungselementes 21 am Holm 2. Aus Fig. 2 ist weiterhin ersichtlich, dass die Lasche 12 dazu bestimmt ist, die Platte 4 so zu umfassen (hintergreifen), dass die Platte 4 zwischen dem Schenkel 6 des Holmes 2 und der Lasche 12 liegt zum Befestigen der Platte 4 am Träger 1,2.

Aus Fig. 2 und 4 ist weiterhin ersichtlich, dass die Lasche 13 dazu bestimmt ist, die horizontale Platte 20 so zu umfassen (hintergreifen), dass die Platte 20 zwischen einem zweiten Träger 22 und der Lasche 13 liegt, zum Befestigen der Platte 20 sowohl am Träger 1, 2 als auch am Träger 22.

Die Laschen 8 bis 11 der ersten Gruppe sind schmaler als die Laschen 12, 13 der zweiten Gruppe. Die beiden Laschen 12 und 13 können an den Ecken des freien Laschenendes mit krallenartigen Abbiegungen 19 versehen sein, die dazu bestimmt sind, krallenartig an den Platten 4 und 20 anzugreifen. In der ebenen Lage des Befestigungselementes nach Fig. 1 sind diese krallenartigen Abbiegungen noch nicht vorhanden und werden erst bei der Montage z.B. mittels einer Zange aus der Ebene des Metallstreifens abgebogen. Damit dies leicht durchgeführt werden kann, kann an dieser Stelle eine Schwächung des Materials z.B. mittels Einschnitten vorgesehen werden.

Das Langloch 16 im Metallstreifen dient dazu, um den horizontalen Holm 2 mit Platte 4 gegenüber dem vertikalen Holm 1 tiefer zu setzen. Hierzu wird nunmehr das Befestigungselement 21 mit seinem Langloch 16 zwischen den Holmen 1 und 2 mittels der Schraube 3 befestigt, so dass die Platte 4 mit Holm 2 und Befestigungselement 21 von der Schraube 3 aus nach unten versetzt hängen.

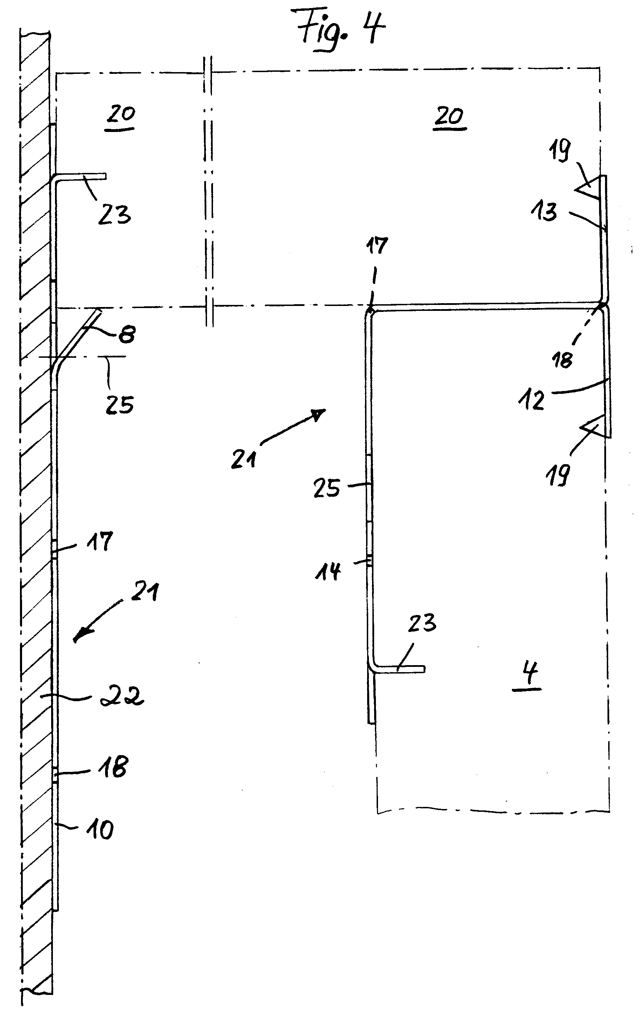

Die Weiterentwicklung des bekannten Befestigungselementes besteht nunmehr darin, dass der Metallstreifen nach Fig. 1 am oberen Ende (den Laschen 12,13 entgegengesetzt) mit mehreren sägezahnförmigen Spitzen 23 versehen ist. Wenn diese rechtwinklig aus der Ebene des Metallstreifens herausgebogen werden, bilden sie Krallen, die dazu bestimmt sind, formschlüssig in die benachbarte Verkleidungsplatte 4 oder 20 einzugreifen. Damit die Spitzen 23 leichter abgebogen werden können, sind zugeordnete Perforationen 24 vorhanden. Das weiterentwickelte Befestigungselement kann in zweierlei Weise verwendet werden. Einmal so, wie es in Fig. 2 gezeigt ist, wobei die beiden Platten 4 und 20 mit ihren jeweils einen Enden am Träger 1,2 befestigt werden können, und das andere Mal so, wie es in Fig. 3 und Fig. 4,(linke Seite) gezeigt ist, wobei das andere Ende der horizontalen Platte 20 in einem anderen Träger 22 befestigt wird.

Hierbei ist das Befestigungselement 21 nicht an den Perforationen 17 abgebogen, und das Befestigungselement wird mittels einer nicht dargestellten Schraube, die in einem Loch 25 des Metallstreifens sitzt, am Träger 22 befestigt. Bei dieser weiteren Verwendung dienen dann die Laschen 8, 9 nicht mehr dazu, das Befestigungselement nach Fig. 2 am Holm zu befestigen, sondern dienen in einer geneigten Stellung zur Ebene des Metallstreifens dazu eine Auflagestelle für die horizontale Verkleidungsplatte 20 zu bilden (siehe Fig. 3 und Fig. 4, linke Seite).

## Patentansprüche

1. Befestigungselement mit Träger, zur Halterung von Verkleidungsplatten (4,20) an diesem Träger (1,2,22), wobei das Befestigungselement (21) aus einem Metallstreifen besteht, der in seiner Ausgangsstellung (Fig. 1) eben ist und mehrere Laschen (8-13) aufweist, die aus der Ebene des Metallstreifens abbiegbar sind, wobei eine erste Gruppe von Laschen (8-11) zumindest teilweise dazu bestimmt ist, Teile (6,7) des Trägers (1,2) klammerartig zu umfassen zum Befestigen des Befestigungselementes (21) am Träger (1,2), und eine zweite Gruppe von Laschen (12,13) dazu bestimmt ist, zumindest eine Verkleidungsplatte (4, 20) so zu umfassen, dass sie zwischen einem Teil (6) des Trägers (1,2;22) und der Lasche (13) der zweiten Gruppe liegt zum Befestigen der Verkleidungsplatte (4,20) am Träger (1,2;22) und am Befestigungselement (21), dadurch gekennzeichnet, dass das Befestigungselement (21) an seinem der zweiten Gruppe von Laschen (12,13) entgegengesetzten Ende mit mehreren sägezahnförmigen Spitzen (23) versehen ist, die, wenn sie aus der Ebene des Metallstreifens im wesentlichen rechtwinklig herausgebogen werden, Krallen bilden, die dazu bestimmt sind, formschlüssig in eine benachbarte Verkleidungsplatte (4,20) einzugreifen.

2. Befestigungselement mit Träger nach Anspruch 1, dadurch gekennzeichnet, dass vier Spitzen (23) vorhanden sind, denen je eine Perforation (24) des Metallstreifens zum Bestimmen von Abbiegestellen zugeordnet sind, zum Bilden von vier Krallen.

3. Befestigungselement mit Träger und Anspruch 1 oder 2, dadurch gekennzeichnet, dass ein Teil (8,9) der ersten Gruppe von Laschen (8-11) dazu bestimmt ist, in eine geneigte Stellung zur Ebene des Metallstreifens abgebogen zu werden, zum Bilden einer Auflagestelle für zumindest einer Verkleidungsplatte (20).

4. Befestigungselement mit Träger und einem der Ansprüche 1-3, wobei der Metallstreifen (21) eine längliche Form hat und mit zumindest einem Langloch (16) versehen ist, dadurch gekennzeichnet, dass sich das Langloch (16) in Längsrichtung des Metallstreifens (21) erstreckt.

5. Befestigungselement mit Träger nach einem der Ansprüche 1-4, dadurch gekennzeichnet, dass das Befestigungselement (21) zumindest mit einer Bohrung (25) versehen ist, mit dem das Befestigungselement (21) an einem zusätzlichen Träger (22) befestbar ist.

6. Verwendung des Befestigungselementes mit Träger nach einem der Ansprüche 1-5 zur Halterung von vertikalen und/oder von horizontalen Verkleidungsplatten (4,20).
